# EUROPÄISCHE PATENTSCHRIFT

(11) **EP 0 716 765 B1**
(45) Veröffentlichungstag und Bekanntmachung des Hinweises auf die Patenterteilung: **02.09.1998**
(21) Anmeldenummer: 95925793.2
(22) Anmeldetag: 30.06.1995
(51) Int. Cl.: G07F 17/42, G07F 5/24

(54) **Kartenverkaufsautomat mit Münzzähler**
Card dispenser comprising a coin counter
Distributeur de cartes comportant un compteur de pièces de monnaie

(30) Priorität: 02.07.1994 DE 9410716 U
(43) Veröffentlichungstag der Anmeldung: 19.06.1996
(73) Patentinhaber: Th. Bergmann GmbH & Co., 25462 Rellingen (DE)
(72) Erfinder: BERGMANN, Tjark, D-20249 Hamburg (DE); WOHLERS, Thorsten, D-22337 Hamburg (DE)
(74) Vertreter: Schmidt-Bogatzky, Jürgen, Dr. Ing.
(86) Internationale Anmeldenummer: EP9502540
(87) Internationale Veröffentlichungsnummer: WO9601460

(56) Entgegenhaltungen:
- EP-A- 0 372 103
- DE-U- 9 215 438
- DE-U- 9 400 263
- US-A- 3 828 904

## Beschreibung

Die Erfindung betrifft einen Kartenverkaufsautomaten für die Ausgabe von Karten unterschiedlicher Werthaltigkeit mit einer Geldannahmeeinrichtung, einer Wechselgeldausgabeeinrichtung, einer Kartenausgabeeinrichtung und einer Belegausgabeeinrichtung, die mit einer elektronischen Steuereinrichtung verbunden sind, und einer Tastatur zur Bestimmung der auszugebenden Karten, deren Wert auf einem Display anzeigbar ist, wobei der Kartenverkaufsautomat vor Inbetriebnahme mit einer Menge Münzgeld vorbestimmten Betrages gefüllt wird, dessen wertmäßiger Betrag in einem Datenspeicher der elektronischen Steuereinrichtung abgespeichert wird und aus dem mindestens einen Münzbehälter mit Münzgeld bei Ausgabe einer Karte bei Überzahlung der für die Karte einzuzahlenden Geldmenge durch die Wechselgeldausgabeeinrichtung so lange Münzgeld in eine Münzgeldausgabeschale geleitet wird, bis die ausgezahlte Menge Münzgeldes dem auszuzahlenden Geldbetrag entspricht, wobei die elektronische Steuereinrichtung als Mikrocomputer ausgebildet ist, der mit der Tastatur der Münzgeldausgabeeinrichtung und der Kartenausgabeeinrichtung verbunden ist, mit einem Kartenspeicher, der mindestens einen Kartendispenser für werthaltige Karten aufweist, wobei die Karten als Chipkarten ohne Werthaltigkeit ausbildbar sind, und mit einem die Wechselgeldausgabeeinrichtung ansteuemden Mikrocomputer.

Derartige Kartenverkaufsautomaten sind zum Beispiel als Verkaufsautomaten für Fahrscheine bekannt. Es ist femer bekannt auf Chipkarten einen bestimmten eingezahlten Geldbetrag zu speichem. Von diesem Geldbetrag können dann individuell für verschiedene Zwecke Teilbeträge abgerufen werden, so zum Beispiel zur Bezahlung von Telefongebühren. Hierbei besteht der Nachteil, daß für das Aufbuchen der jeweiligen Beträge auf den Chip besondere Einrichtungen erforderlich sind, die den Kartenverkaufsautomat verteuern und damit seinen Einsatzbereich aus wirtschaftlichen Gründen beschränken. In Verkaufsstätten, die stark von Kaufpublikum frequentiert werden, wie z.B. Buch- und Zeitschriftengeschäfte, SB-Märkte, Tankstellen, Warenhäuser, Einkaufsmärkte u. dgl. besteht für die Käufer oft das Problem, nicht über das Münzgeld zu verfügen, das z.B. zur Entnahme von Einkaufswagen als Pfand erforderlich ist. Ein Geldwechsel an Kassen ist aufgrund des Publikumandrangs oft nicht möglich und für den Kassenbetreiber auch unerwünscht. Dieses Problem könnte zwar durch an sich bekannte Geldwechselautomaten gelöst werden. Damit diese in solchen Fällen wirtschaftlich betrieben werden können, müßte eine Wechselgebühr erhoben werden, was im Massengeschäft von dem Kaufpublikum jedoch nicht akzeptiert wird.

Ein Kartenausgabeautomat ist bereits durch die DE-U-94 00 263 bekannt. Dieser hat den Nachteil, daß er nicht als Geldwechsler eingesetzt werden kann.

In der US-A-38 28 904 ist ein Warenverkaufsautomat beschrieben, der als Fahrkartenausgabeautomat eingesetzt werden kann. Bei diesem Warenverkaufsautomat besteht der Nachteil, daß ein Geldwechseln nur in Verbindung mit dem Erwerb einer Ware oder einer Fahrkarte erfolgen kann, unabhängig davon, ob diese benötigt werden.

Die Aufgabe der Erfindung besteht darin, einen Kartenverkaufsautomaten der eingangs genannten Art als Geldwechseleinrichtung so auszubilden, daß einerseits beim Geldwechseln vorzugsweise eine Karte mit einer besonderen Werthaltigkeit für eine räumlich und zeitlich unbegrenzte Verwertung erworben werden muß, die für die geldwechselnde Person einen zusätzlichen Nutzen bedeutet, und andererseits auch die Möglichkeit eines reinen Geldwechselns besteht.

Erfindungsgemäß erfolgt die Lösung der Aufgabe durch die Merkmale des Anspruches 1. Vorteilhafte Ausgestaltungen der Erfindung werden in den abhängigen Ansprüchen beschrieben.

Nach der Erfindung ist es möglich, die geldwechselnde Person mit einer Karte zu versehen, die einerseits eine bestimmte Werthaltigkeit hat und andererseits auch mit einer Werbung z.B. der Verkaufsstätte versehen sein kann. Besonders vorteilhaft ist es, die auszugebende Karte als Telefonkarte auszubilden, da diese für den Erwerber einen besonders großen Nutzen bedeutet. Diese Telefonkarten bedeuten somit für den Kunden einen zusätzlichen Service, der ohne zusätzlichen Personalaufwand für das Betreiben der Kartenverkaufsautomaten einschließlich der Geldwechseleinrichtung über 24 Stunden vorgehalten werden kann. Außerdem ist es für den Betreiber möglich, die Verkaufspreise für die Telefonkarten je nach örtlichen Bedingungen frei zu gestalten.

Die auszugebenden Karten können auch als gutscheinartige Wertscheinkarten ausgebildet sein, die in der Verkaufsstätte verrechnet werden können. Es ist auch möglich, den erfindungsgemäßen Kartenverkaufsautomaten so auszubilden oder einzustellen, daß nur ein Geldwechselvorgang durchgeführt wird, ohne daß eine Kartenausgabe erfolgt. Dies kann z.B. sein, wenn Geld unterschiedlicher Währungen gewechselt werden soll, wenn die Kartendispenser entleert sind oder aber außerhalb der Geschäftszeiten der Verkaufsstätte, wenn gutscheinartige Wertkarten für die geldwechselnde Person nicht sofort verwertbar sind. In solchen Fällen kann der erfindungsgemäße Kartenverkaufsautomat so eingestellt werden, daß bei reinen Geldwechselvorgängen eine Gebühr berechnet und von dem Kartenverkaufsautomaten einbehalten wird.

Die Erfindung wird nachstehend am Beispiel des in den Zeichnungen schematisch dargestellten Kartenverkaufsautomaten näher beschrieben. Es zeigt:
- Fig. 1: die Frontseite des Kartenverkaufsautomaten,
- Fig. 2: ein Funktionsschaubild des Kartenverkaufsautomaten,
- Fig. 3: das Blockschaltbild des Kartenverkaufsautomaten,
- Fig. 4: ein Funktionsschaubild eines weiteren Kartenverkaufsautomaten.

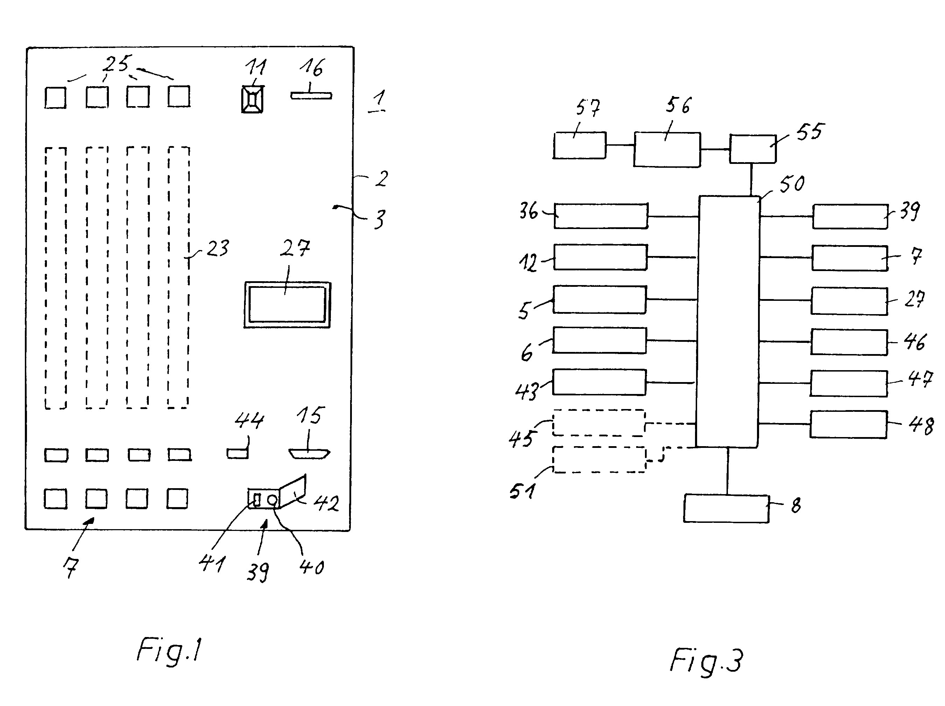

Wie in Fig. 1 dargestellt, weist die Frontseite 3 des Gehäuses 2 des Kartenverkaufsautomaten 1 alle für dessen Bedienung erforderlichen Elemente auf. Mittels der Tastatur 7 kann die jeweils auszugebende Karte ausgewählt werden, was durch die dem betreffenden Kartendispenser 23 zugeordnete Anzeige 25 angezeigt wird. Falls ein Kartendispenser 23 leer ist, wird dieses durch die entsprechende Anzeige 25 angezeigt. Die Kartenausgabe erfolgt über die Kartenausgabeschlitze 26.

Die Geldeingabe kann durch Münzgeld und/oder Geldscheine erfolgen. Hierzu ist ein Geldscheineingabeschlitz 16 und ein Münzeinwurfschlitz 11 vorgesehen. Der nach Abzug des Wertes der auszugebenden Karte in Münzgeld auszuzahlende Restbetrag wie auch der Betrag des einzuzahlenden Geldwertes wird auf dem Display 27 angezeigt. Die Wechselgeldrückgabe erfolgt in die Münzgeldausgabeschale 15.

In der Frontseite 3 ist ferner ein Interface 39 vorgesehen, an das mittels eines Steckers eine weitere Tastatur anschließbar ist. Das Interface 39 ist mit einer Buchse 40 verbunden, in die der zum Beispiel als Diodenstecker ausgebildete Stecker einer Tastatur eingesteckt werden kann, um die Daten über interne Statistiken betreffend den Geldmengen- und Kartenverkehr über einen Drucker ausdrucken lassen zu können. Es können auch Informationen über Service und gerätetechnische Einstellungen abgerufen und ausgedruckt und/oder auf dem Display 27 angezeigt werden. Ferner kann der Füllstand des Geldscheinsammelbehälters 18 und des Münzbehälters 34 der Geldannahmeeinrichtung 4 überprüft werden. Das Interface 39 kann auch mit einem D-Subminiatur-Stecker 41 als RS 232 C Schnittstelle verbunden sein, der zum Anschluß eines externen Computers oder Auslesegerätes dient. Der D-Subminiatur-Stecker 41 und die Buchse 40 sind mittels einer verschließbaren Klappe 42 abdeckbar.

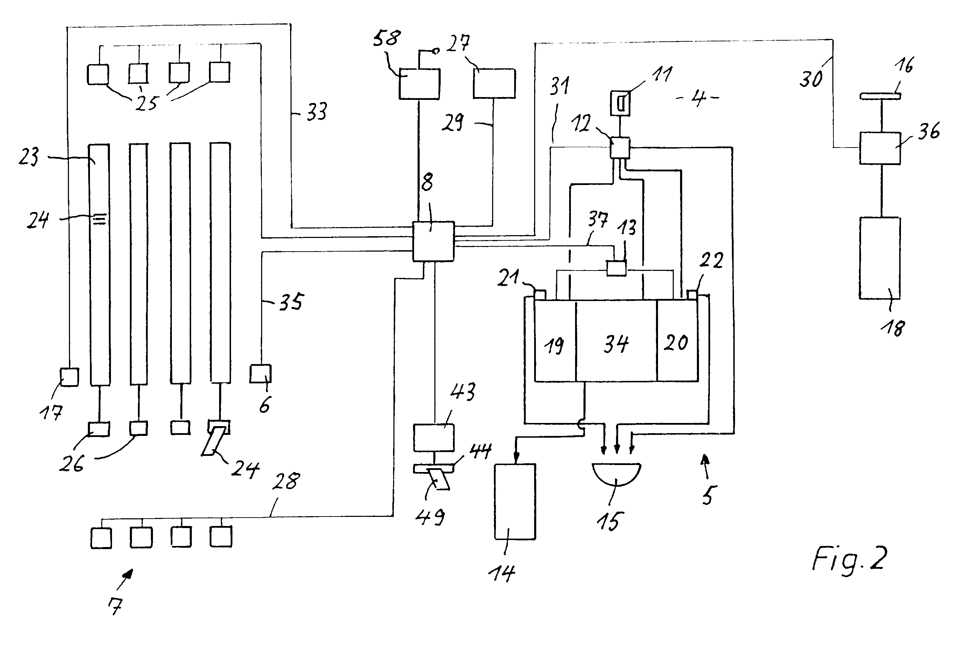

Wie in Fig. 2 dargestellt, erfolgt die Steuerung des Kartenverkaufsautomaten 1 durch einen zentralen Mikrocomputer 8. Die Tastatur 7 ist mittels einer Datenleitung 28 mit dem Mikrocomputer 8 verbunden, während das Display 27 mittels einer Datenleitung 29 mit dem Mikrocomputer 8 verbunden ist. Bei getroffener Auswahl eines bestimmten Geldbetrages für eine Karte 24 wird über eine Steuerleitung 35 vom Mikrocomputer 8 die Kartenausgabeeinrichtung 6 für die Ausgabe einer Karte 24 angesteuert. Durch diese Kartenausgabeeinrichtung 6 wird die durch Bedienung einer der Tasten der Tastatur 7 ausgewählte Karte 24 durch den Kartenausgabeschlitz 26 in der Frontseite 3 des Kartenverkaufsautomaten 1 ausgegeben. Jedem Kartendispenser 23 ist ein Füllstandssensor 17 zugeordnet, der über den Mikrocomputer 8 mit der jeweiligen Anzeige 25 verbunden ist.

Die Ausgabe der Karte 24, die vor der Ausgabe überprüft wird, erfolgt erst dann, wenn eine Geldmenge der Geldannahmeeinrichtung 4 zugeführt worden ist, deren Wert mindestens dem Wert der Karte 24 entspricht, der bei Betätigung der zur Kartenausgabe erforderlichen Taste der Tastatur 7 im Display 27 angezeigt wird. Hierzu müssen der Geldannahmeeinrichtung 4 die dem Geldbetrag entsprechenden Geldscheine und/oder Münzen durch den Geldscheineingabeschlitz 16 bzw. den Münzeinwurfschlitz 11 zugeführt werden. Eingeführte Geldscheine werden in einem Geldscheinprüfer 36 überprüft. Falsifikate werden durch den Geldscheineingabeschlitz 16 wieder ausgegeben. Einwandfreie Geldscheine werden den Geldscheinsammelbehältern 18 zugeführt, wobei der Wert dieser Geldscheine über die Datenleitung 30 dem Mikrocomputer 8 zugeführt wird. Der Banknotenleser des Geldscheinprüfers 36 kann so ausgebildet sein, daß Banknoten in mindestens zwei verschiedenen Währungen eingegeben werden können, wobei gleichzeitig eine Kursumrechnung bezogen auf die im Kartenverkaufsautomat 1 geltende Hauptwährung erfolgt. Durch den Münzeinwurf 11 eingegebenes Münzgeld wird in einem Münzprüfer 12 geprüft. Falschmünzen werden wieder in die Münzgeldausgabeschale 15 ausgegeben. Einwandfreies Münzgeld wird einem Münzbehälter 34 zugeführt. Die dem Münzbehälter 34 zugeführte Münzmenge wird betragsmäßig über die Datenleitung 31 dem Mikrocomputer 8 zugeführt. Sofern der Münzbehälter 34 beim Betrieb des Kartenverkaufsautomaten 1 gefüllt ist, kann überschüssiges Münzgeld in einen Münzsammelbehälter 14 weitergeleitet werden. Bei einer Überzahlung wird der Differenzbetrag als Münzgeld wieder ausgegeben. Auszugebendes Münzgeld wird mittels der Münzgeldverarbeitungseinrichtung nach Ansteuerung über die Steuerleitung 37 durch den Mikrocomputer 8 aus dem Münzbehälter 34 entnommen und der Münzgeldausgabeschale 15 zugeführt. Die Münzgeldverarbeitungseinrichtung weist zwei Hopper 19, 20 auf, die jeweils Münzen einer bestimmten Münzsorte in die Münzgeldausgabeschale 15 zur Wechselgeldrückgabe fördern. Über die Steuerleitung 37 wirkt der Mikrocomputer 8 auf den Schalter 13 ein, der in Abhängigkeit von dem jeweils auszugebenden Wert des Münzgeldes einen der beiden Hopper 19, 20 schaltet, die jeweils für die Ausgabe einer bestimmten Münzsorte vorgesehen sind. Am Ausgang eines jeden Hoppers 19, 20 ist ein Münzzähler 21, 22 vorgesehen, der jeweils mittels einer Datenleitung 31, 32 mit dem Mikrocomputer 8 verbunden ist. Dieser steuert abhängig vom noch auszugebenden Münzgeldbetrag den Schalter 13 und damit den Betrieb des jeweiligen Hoppers 19, 20.

Mit Ausgabe der ausgewählten Karte 24 und Auszahlung des rückzuzahlenden Münzgeldes in die Münzgeldausgabeschale 15 wird gleichzeitig vom Belegdrucker 43 ein Beleg 49 über den kassentechnischen Vorgang ausgedruckt und durch den Belegausgabeschlitz 44 ausgegeben.

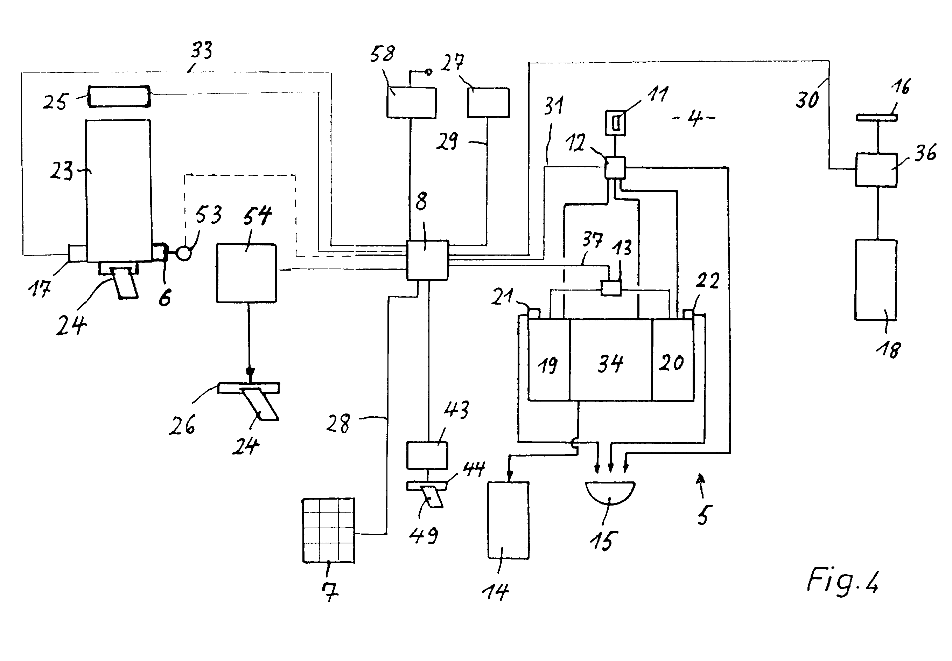

Wie Fig. 3 zeigt, kann der Mikrocomputer 8 mit einer als Prozessoreinheit ausgebildeten Steuereinheit 50 verbunden sein, die die für den Betrieb des Kartenverkaufsautomaten 1 erforderlichen Signale abgibt bzw. aufnimmt und an den Mikrocomputer 8 weiterleitet. Die Steuereinheit 50 ist über ein Schaltnetzteil 55 und einen Sicherungs/Netzschalter 56 mit einem Netzanschluß 57 verbunden. An die Steuereinheit 50 sind ferner der Geldscheinprüfer 36, Münzprüfer 12, Münzgeldausgabeeinrichtung 5, Kartenausgabeeinrichtung 6, der Belegdrukker 43, das Interface 39, die Tastatur 7 und das Display 27 angeschlossen. Zur einfachen Durchführung von Service-Maßnahmen ist die Steuereinheit 50 ferner mit einem Service-Schalter 46 zur Freigabe von ServiceFunktionen sowie einer Service-Tastatur 47 verbunden. Der Funktions-Schlüsselschalter 48 dient zur Freigabe oder Sperre der Funktionen des Kartenverkaufsautomaten 1. Vorteilhaft sind der Service-Schalter 46, die Service-Tastatur 47 und der Funktions-Schlüsselschalter 48 im Innern des Gehäuses 2 des Kartenverkaufsautomaten 1 angeordnet, z. B. an der Innenseite der Fronttür. In einer Aufrüstung kann der Kartenverkaufsautomat 1 auch zusätzlich eine Magnet-/Chipkartenstation 45 aufweisen, die ebenfalls mit der Steuereinheit 50 verbunden wird. Diese Magnet-/Chipkartenstation 45, die in Fig. 3 durch Strichlinien dargestellt ist, kann es z. B. ermöglichen, den Kartenverkaufsautomaten 1 auch durch Eingabe von Scheckkarten oder Kreditkarten bedienen zu können. Die Magnet-/Chipkartenstation 45 kann auch zum lesen und beschreiben anderer Karten ausgebildet sein. Von verwendeten werthaltigen Chipkarten können auch Teilbeträge ausgezahlt werden.

Der Kartenverkaufsautomat kann auch so ausgebildet werden, daß nur ein Kartendispenser 23 zur Aufnahme von Chipkarten ohne Werthaltigkeit als Karten 24 vorgesehen ist (Fig. 4). Bei Eingabe von Geld in die Geldannahmeeinrichtung 4 wird durch die Kartenausgabeeinrichtung 6 nach Bedienung eines Tasters 53 eine Karte 24 ausgegeben, die nach Einführen in den Kartenausgabeschlitz 26 mit dem durch die Tastatur 7 eingegebenen und auf der Anzeige 25 angezeigten Betrag mittels der Kartenaufwertestation 54 aufgewertet wird. Nach Aufwertung erfolgt die Ausgabe der Karte 24 durch den Kartenausgabeschlitze 26 unter Rückzahlung eventuell noch vorhandenen Restgeldes. Bei dieser Ausbildung eines Kartenverkaufsautomaten ist es auch möglich, beim Geldwechseln eine bereits vorhandene Chipkarte in den Kartenausgabeschlitz 26 einzuführen und durch die Kartenaufwertestation 54 aufwerten zu lassen, so daß dann die Entnahme einer Karte 24 aus dem Kartendispenser 23 nicht erforderlich ist. Es ist möglich, den Geldwechselvorgang so zu gestalten, daß ein bestimmter Betrag als Geldwechselgebühr nicht ausgezahlt bzw. aufgewertet wird, sondern im Kartenverkaufsautomaten verbleibt. Bei Rücknahme einer leeren Chipkarte kann eine Pfandgeldauszahlung erfolgen.

Der Kartenverkaufsautomat 1 kann auch über eine Datenfunkübertragungseinrichtung 58 oder über die Schnittstelle RS 232 C an einen Zentralrechner angeschlossen werden, der die Betriebszustände verschiedener Kartenverkaufsautomaten überwacht.

Es ist auch möglich, den Kartenverkaufsautomaten 1 zusätzlich mit einer Chipkarten-Lese- und/oder Beschreibungseinrichtung 51 zu versehen, die mit dem Mikrocomputer 8 verbunden ist. Mittels dieser Chipkarten-Lese- und/oder Beschreibungseinrichtung 51 kann eine Chipkarte vor Ausgabe gelesen und/oder beschrieben werden.

## Patentansprüche

1. Kartenverkaufsautomat (1) für die Ausgabe von Karten (24) unterschiedlicher Werthaltigkeit mit einer Geldannahmeeinrichtung (4), einer Wechselgeldausgabeeinrichtung (5), einer Kartenausgabeeinrichtung (6) und einer Belegausgabeeinrichtung (43,44), die mit einer elektronischen Steuereinrichtung (8,50) verbunden sind, und einer Tastatur (7) zur Bestimmung der auszugebenden Karten (24), deren Wert auf einem Display (27) anzeigbar ist, wobei der Kartenverkaufsautomat vor Inbetriebnahme mit einer Menge Münzgeld vorbestimmten Betrages gefüllt wird, dessen wertmäßiger Betrag in einem Datenspeicher der elektronischen Steuereinrichtung abgespeichert wird, und aus dem mindestens einen Münzbehälter (34) mit Münzgeld bei Ausgabe einer Karte (24) bei Überzahlung der für die Karte (24) einzuzahlenden Geldmenge durch die Wechselgeldausgabeeinrichtung so lange Münzgeld in eine Münzgeldausgabeschale (15) geleitet wird, bis die ausgezahlte Menge Münzgeldes dem auszuzahlenden Geldbetrag entspricht, wobei die elektronische Steuereinrichtung als Mikrocomputer (8) ausgebildet ist, der mit der Tastatur (7) der Münzgeldausgabeeinrichtung (5) und der Kartenausgabeeinrichtung (6) verbunden ist, mit einem Kartenspeicher, der mindestens einen Kartendispenser (23) für werthaltige Karten (24) aufweist, wobei die Karten (24) als Chipkarten ohne Werthaltigkeit ausgebbar sind, und mit einem die Wechselgeldausgabeeinrichtung ansteuemden Mikrocomputer (8), dadurch gekennzeichnet, daß der Münzbehälter (34) mindestens einen Hopper (19, 20) mit einem münzabgabeseitigen, mit dem Mikrocomputer (8) verbundenen Münzzähler (21, 22) aufweist.

2. Kartenverkaufsautomat nach Anspruch 1, dadurch gekennzeichnet, daß der Mikrocomputer (8) über eine Datenleitung (30) mit einem Geldscheinprüfer (36) der Geldannahmeeinrichtung (4) verbunden ist.

3. Kartenverkaufsautomat nach Anspruch 1, dadurch gekennzeichnet, daß der Mikrocomputer (8) über eine Datenleitung (31) mit einem Münzprüfer (12) der Geldannahmeeinrichtung (4) verbunden ist.

4. Kartenverkaufsautomat nach Anspruch 1, dadurch gekennzeichnet, daß jedem Kartendispenser (23) ein Füllstandsensor (17) zugeordnet ist, der über den Mikrocomputer (8) mit einer Anzeige (25) verbunden ist.

5. Kartenverkaufsautomat nach Anspruch 1 bis 4, dadurch gekennzeichnet, daß an dem Gehäuse (2) des Kartenverkaufsautomaten (1) ein Interface (39) angeordnet ist, an das mittels eines Steckers ein Zentralrechner oder eine weitere Tastatur anschließbar ist, mittels der menügesteuert Informationen über Kassierung und Statistik, Aufsichtskonten, Service und gerätetechnische Einstellung abgerufen und auf dem Display (27) angezeigt werden und der Füllstand des dem Geldscheinprüfer (36) zugeordneten Geldscheinsammelbehälters (18), der der Münzgeldverarbeitungseinrichtung (13) zugeordneten Münzbehälter (34) und der Kartendispenser (23) überprüfbar ist.

6. Kartenverkaufsautomat nach Anspruch 5, dadurch gekennzeichnet, daß der Stecker als Diodenstecker ausgebildet ist.

7. Kartenverkaufsautomat nach Anspruch 5, dadurch gekennzeichnet, daß an dem Interface (39) ein D-Subminiatur-Stecker (41) für den Anschluß eines externen Computers oder Auslesegerätes ausgebildet ist.

8. Kartenverkaufsautomat nach Anspruch 5, dadurch gekennzeichnet, daß das Interface (39) mit einem Belegdrucker (9) verbunden ist, der mit dem Mikrocomputer (8) in Verbindung steht.

9. Kartenverkaufsautomat nach Anspruch 5 bis 8, dadurch gekennzeichnet, daß das Interface (39) D-Subminiatur-Stecker (41) und Buchse (40) für den Stecker an der Frontseite (3) des Gehäuses (2) angeordnet und mittels einer verschließbaren Klappe (42) abdeckbar ist.

10. Kartenverkaufsautomat nach Anspruch 1 bis 9, dadurch gekennzeichnet, daß der Mikrocomputer (8) mit einer Steuereinheit (50) verbunden ist, die über ein Schaltnetzteil (55) an einen Netzanschluß (57) angeschlossen und die mit dem Geldscheinprüfer (36), dem Münzprüfer (12), der Münzgeldausgabeeinrichtung (5), der Kartenausgabeeinrichtung (6), dem Belegdrucker (43) und dem Display (27) verbunden ist.

11. Kartenverkaufsautomat nach Anspruch 10, dadurch gekennzeichnet, daß das Interface (39) mit der Steuereinheit (50) verbunden ist.

12. Kartenverkaufsautomat nach Anspruch 10, dadurch gekennzeichnet, daß an die Steuereinheit (50) ein Service-Schalter (46) und eine Service-Tastatur (47) angeschlossen sind.

13. Kartenverkaufsautomat nach Anspruch 10, dadurch gekennzeichnet, daß die Steuereinheit (50) mit einem Funktions-Schlüsselschalter (48) verbunden ist.

14. Kartenverkaufsautomat nach Anspruch 1 bis 13, dadurch gekennzeichnet, daß der Mikrocomputer (8) mit einer Datenfunkübertragungseinrichtung (58) verbunden ist.

15. Kartenverkaufsautomat nach Anspruch 2, dadurch gekennzeichnet, daß der Geldscheinprüfer (36) einen Mehrwährungs-Banknotenleser aufweist.

16. Kartenverkaufsautomat nach Anspruch 15, dadurch gekennzeichnet, daß der Mikrocomputer (8) mit einer einstellbaren Währungsumrechnungseinrichtung verbunden ist.

17. Kartenverkaufsautomat nach Anspruch 1 bis 4, dadurch gekennzeichnet, daß der Mikrocomputer (8) mit einer Chipkarten-Lese- und/oder Beschreibungseinrichtung (51) verbunden ist.

18. Kartenverkaufsautomat nach Anspruch 1 bis 4, dadurch gekennzeichnet, daß der Mikrocomputer (8) mit einer Kartenaufwertestation (54) verbunden ist.

19. Kartenverkaufsautomat nach Anspruch 17, dadurch gekennzeichnet, daß die Chipkartenlese- und/oder Beschreibungseinrichtung (51) in der Kartenausgabeeinrichtung (6) angeordnet ist, wobei sowohl die Kartenausgabeeinrichtung (6) wie auch die Chipkartenlese- und/oder Beschreibungseinrichtung (51) mit dem Mikrocomputer (8) verbunden sind.

## Claims

1. An automatic card sales dispenser (1) for dispensing cards (24) of varying values having a cash-intake device (4), a change-dispensing device (5), a card-dispensing device (6) and a docket-dispensing device (43, 44), all being connected to an electronic control device (8, 50), and a keyboard (7) for specifying the cards to be dispensed (24), the value of which can be indicated on a display (27), the automatic card sales dispenser being stocked, before being put into service, with a quantity of coins of predetermined denomination, the value of which is stored in a data storage of the electronic control device and, when a card (24) is dispensed on payment of the amount of money to be remitted for the card (24) cash is fed out of the at least one cash container (34) containing cash into a coin-dispensing dish (15) until the quantity of coins paid out corresponds to the cash amount to be paid out, in which the electronic control device is a microcomputer (8) connected to the keyboard (7), the cash-dispensing device (5) and the card-dispensing device (6), which has a card memory which has at least one card dispenser (23) for cards (24) indicating value, whereby the cards (24) can be dispensed as chip cards without any value, and having a microcomputer (8) controlling the change-dispensing device, characterised in that the coin container (34) has at least one hopper (19, 20) with a coin-counter (21, 22) connected to the computer (8) on the coin-dispensing side.

2. An automatic card sales machine as claimed in claim 1, characterised in that the microcomputer (8) is connected to a banknote checker (36) of the cash-intake device (4) via a data line (30).

3. An automatic card sales machine as claimed in claim 1, characterised in that the microcomputer (8) is connected to a coin-checker (12) of the cash-intake device (4) via a data line (31).

4. An automatic card sales machine as claimed in claim 1, characterised in that a level sensor (17) is assigned to each card dispenser (23) and connected to a display (25) by means of the microcomputer (8).

5. An automatic card sales machine as claimed in claim 1 to 4, characterised in that an interface (39) is arranged on the housing (2) of the automatic card sales machine (1), which can be connected by means of a plug to a central computer or an additional keyboard, by means of which menu-driven data pertaining to cash receipts and statistics, control accounts, service and technical specifications can be retrieved and displayed on the display (27) and the level of the banknote intake container (18) assigned to the banknote checker (36), that of the coin container (34) assigned to the cash processing device (13) and that of the card dispenser (23) can be verified.

6. An automatic card sales machine as claimed in claim 5, characterised in that the plug is a diode plug.

7. An automatic card sales machine as claimed in claim 5, characterised in that a D-subminiature plug (41) is provided on the interface (39) for connecting an external computer or read-out device.

8. An automatic card sales machine as claimed in claim 5, characterised in that the interface (39) is connected to a docket printer (9), which is connected to the microcomputer (8).

9. An automatic card sales machine as claimed in claim 5 to 8, characterised in that the interface (39), D-subminiature plug (41) and a jack (40) for the plug are arranged on the front face (3) of the housing (2) and can be covered by means of a lockable flap.

10. An automatic card sales machine as claimed in claim 1 to 9, characterised in that the microcomputer (8) is connected to a control unit (50), which links into a network connection (57) via a network-switching element (55) and is connected to the banknote checker (36), the coin checker (57), the coin-dispensing device (5), the card-dispensing device (6), the docket printer (43) and the display (27).

11. An automatic card sales machine as claimed in claim 10, characterised in that the interface (39) is connected to the control unit (50).

12. An automatic card sales machine as claimed in claim 10, characterised in that the control unit (50) is connected to a service switch (46) and a service keyboard (47).

13. An automatic card sales machine as claimed in claim 10, characterised in that the control unit (50) is connected to a function keyswitch (48).

14. An automatic card sales machine as claimed in claim 1 to 13, characterised in that the microcomputer (8) is connected to a radio transmitter device (58).

15. An automatic card sales machine as claimed in claim 2, characterised in that the banknote checker (36) has a multi-currency banknote reader .

16. An automatic card sales machine as claimed in claim 15, characterised in that the microcomputer (8) is connected to an editable currency conversion device.

17. An automatic card sales machine as claimed in claim 1 to 4, characterised in that the microcomputer (8) is connected to a chip card read and/or write device (51).

## Revendications

1. Distributeur automatique de cartes (1) pour la délivrance de cartes (24) de différentes valeurs avec un dispositif de réception d'argent (4), un dispositif de délivrance de monnaie (5), un dispositif de délivrance de cartes (6) et un dispositif de délivrance de justificatifs (43, 44) qui sont reliés à un dispositif électronique de commande (8, 50) et un clavier (7) pour déterminer les cartes (24) à délivrer dont la valeur peut s'afficher sur un écran de visualisation (27), le distributeur automatique de cartes étant rempli avant sa mise en service d'une quantité de pièces de monnaie d'un montant prédéterminé, dont la valeur est stockée dans une mémoire de données du dispositif électronique de commande, et des pièces de monnaie étant acheminées au moins hors d'un réceptacle à monnaie (34) contenant des pièces de monnaie lors de la délivrance d'une carte (24), en cas de surpaiement de la somme d'argent à payer pour la carte (24), dans une cuvette de sortie de pièces de monnaie (15) tant que la quantité versée de pièces de monnaie correspond à la somme d'argent à verser, le dispositif de commande électronique se présentant sous la forme d'un micro-ordinateur (8) qui est relié au clavier (7) du dispositif de délivrance de pièces de monnaie (5) et au dispositif de délivrance de cartes (6), avec une mémoire de cartes, qui comporte au moins un distributeur de cartes (23) pour des cartes (24) contenant une valeur, les cartes (24) pouvant être délivrées en tant que cartes à puce ne contenant pas de valeur, et avec un micro-ordinateur (8) commandant le dispositif de délivrance de monnaie, caractérisé en ce que le réceptacle à monnaie (34) présente au moins une trémie (19, 20) avec un compteur automatique à paiement préalable (21, 22) situé du côté du dispositif de délivrance de pièces de monnaie et relié au micro-ordinateur (8).

2. Distributeur automatique de cartes selon la revendication 1, caractérisé en ce que le micro-ordinateur (8) est relié à un vérificateur de billets (36) du dispositif de réception d'argent (4) par l'intermédiaire d'une ligne de transmission de données (30).

3. Distributeur automatique de cartes selon la revendication 1, caractérisé en ce que le micro-ordinateur (8) est relié à un vérificateur de pièces de monnaie (12) du distributeur de réception d'argent (4) par l'intermédiaire d'une ligne de transmission de données (31).

4. Distributeur automatique de cartes selon la revendication 1, caractérisé en ce qu'un détecteur de niveau de remplissage (17) qui est relié à un affichage (25) par l'intermédiaire du micro-ordinateur (8) est affecté à chaque distributeur de cartes (23).

5. Distributeur automatique de cartes selon les revendications 1 à 4, caractérisé en ce qu'une interface (39) est disposée sur le boîtier du distributeur automatique de cartes (1), à laquelle on peut connecter, au moyen d'une fiche, une unité centrale ou un clavier supplémentaire au moyen duquel des informations relatives à l'encaissement et aux statistiques, à des comptes de surveillance, au service et au réglage technique des appareils, sont appelées en étant commandées par menu et sont affichées sur l'écran de visualisation (27) et en ce que le niveau de remplissage du réservoir collecteur de billets (18) affecté au vérificateur de billets (36), le réceptacle à monnaie (34) affecté au dispositif de traitement des pièces de monnaie (13) et le distributeur de cartes (23) peuvent être contrôlés.

6. Distributeur automatique de cartes selon la revendication 5, caractérisé en ce que la fiche se présente sous la forme d'une fiche à diodes.

7. Distributeur automatique de cartes selon la revendication 5, caractérisé en ce qu'une fiche subminiature D (41) est conçue sur l'interface (39) pour la connexion d'un ordinateur externe ou d'un appareil de lecture.

8. Distributeur automatique de cartes selon la revendication 5, caractérisé en ce que l'interface (39) est reliée à une imprimante de justificatifs (9) qui est connectée au micro-ordinateur (8).

9. Distributeur automatique de cartes selon les revendications 5 à 8, caractérisé en ce que l'interface (39), la fiche subminiature D (41) et la douille (40) pour la fiche sont disposées sur la face frontale (3) du boîtier (2) et peuvent être recouvertes au moyen d'une trappe fermant à clé (42).

10. Distributeur automatique de cartes selon les revendications 1 à 9, caractérisé en ce que le micro-ordinateur (8) est relié à une unité de commande (50) qui est connectée à un branchement au réseau (57) par l'intermédiaire d'un bloc réseau de commande (55) et est reliée au vérificateur de billets (36), au vérificateur de pièces de monnaie (12), au dispositif de délivrance de pièces de monnaie (5), au dispositif de délivrance de cartes (6), à l'imprimante de justificatifs (43) et à l'écran de visualisation (27).

11. Distributeur automatique de cartes selon la revendication 10, caractérisé en ce que l'interface (39) est reliée à l'unité de commande (50).

12. Distributeur automatique de cartes selon la revendication 10, caractérisé en ce qu'un actionneur de service (46) et un clavier de service (47) sont connectés à l'unité de commande (50).

13. Distributeur automatique de cartes selon la revendication 10, caractérisé en ce que l'unité de commande (50) est reliée à un interrupteur de fonctions à clé (48).

14. Distributeur automatique de cartes selon les revendications 1 à 13, caractérisé en ce que le micro-ordinateur (8) est relié à une installation de radiotransmission de données (58).

15. Distributeur automatique de cartes selon la revendication 2, caractérisé en ce que le vérificateur de billets (36) comporte un lecteur de billets de banque en différentes monnaies.

16. Distributeur automatique de cartes selon la revendication 15, caractérisé en ce que le micro-ordinateur (8) est relié à un dispositif convertisseur de monnaie.

17. Distributeur automatique de cartes selon les revendications 1 à 4, caractérisé en ce que le micro-ordinateur (8) est relié à un dispositif de lecture de cartes à puce et/ou à un dispositif d'enregistrement.
